(19) Europäisches Patentamt
European Patent Office
Office européen des brevets

(11) **EP 4 697 803 A1**

(12) **EUROPEAN PATENT APPLICATION**
published in accordance with Art. 153(4) EPC

(43) Date of publication:
**18.02.2026  Bulletin 2026/08**

(21) Application number: **24806179.8**

(22) Date of filing: **18.03.2024**

(51) International Patent Classification (IPC):
***H04W 36/00*** (2009.01)

(52) Cooperative Patent Classification (CPC):
**H04W 36/00; H04W 36/08**

(86) International application number:
**PCT/CN2024/082299**

(87) International publication number:
**WO 2024/234819 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023  CN 202310539182
10.08.2023  CN 202311006078**

(71) Applicant: **Huawei Technologies Co., Ltd.
Shenzhen, Guangdong 518129 (CN)**

(72) Inventors:
• **ZHONG, Yaping**
**Shenzhen, Guangdong 518129 (CN)**
• **HU, Xingxing**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57)    This application provides a communication method and a communication apparatus. In the method, a terminal device receives time information from a first cell, where the time information indicates first time at which switching without layer 3 (L3) signaling takes effect; and performs switching from the first cell to a second cell based on the time information. In this solution, the terminal device triggers, based on the received time information, to start a switching procedure without L3 signaling, so that the switching procedure without L3 signaling is correctly started. This helps the terminal device correctly perform cell switching.

FIG. 2

## Description

### CROSS-REFERENCE TO RELATED APPLICATIONS

This application claims priorities to Chinese Patent Application No. 202310539182.9, filed with the China National Intellectual Property Administration on May 12, 2023 and entitled "COMMUNICATION METHOD AND COMMUNICATION APPARATUS", and to Chinese Patent Application No. 202311006078.X, filed with the China National Intellectual Property Administration on August 10, 2023 and entitled "COMMUNICATION METHOD AND COMMUNICATION APPARATUS", both of which are incorporated herein by reference in their entireties.

### TECHNICAL FIELD

Embodiments of this application relate to the field of wireless communication technologies, and specifically, to a communication method and a communication apparatus.

### BACKGROUND

In mobile communication, cell switching is usually based on layer 3 (layer 3, L3) signaling. For example, before the switching, a source base station sends a switching command to a terminal device, to indicate the terminal device to perform the switching, and after the terminal device switches to a target base station, the terminal device sends a switching complete message to the target base station, to indicate that the switching is completed. The switching command and the switching complete message herein are both the L3 signaling. In addition, in an L3 signaling switching procedure, the terminal device may access the target base station through a random access procedure, or may access the target base station in a random access channel-less (random access channel-less, RACH-less) manner.

However, in some new scenarios, switching without L3 signaling may be involved. For example, the source base station does not send a switching command to the terminal device, and the terminal device does not send a switching complete message to the target base station. How to trigger cell switching in a switching procedure without L3 signaling needs to be resolved.

### SUMMARY

This application provides a communication method and a communication apparatus, so that a terminal device correctly performs cell switching.

According to a first aspect, an embodiment of this application provides a communication method. The method may be performed by a terminal device or a module (for example, a chip) used in the terminal device.

The method includes: receiving time information from a first cell, where the time information indicates first time at which switching without L3 signaling takes effect; and performing switching from the first cell to a second cell based on the time information.

In the foregoing solution, the terminal device triggers, based on the received time information, to start a switching procedure without L3 signaling, so that the switching procedure without L3 signaling is correctly started. This helps the terminal device correctly perform cell switching.

In a possible implementation method, the method further includes: starting a first timer after the first time arrives, where the terminal device determines, after the first timer expires, that the switching fails.

In the foregoing solution, a manner in which the terminal device starts the first timer is provided. This helps the terminal device correctly determine whether the switching succeeds in the switching process, thereby improving a switching success rate.

In a possible implementation method, the method further includes: receiving a first message from the first cell, where the first message includes timing duration of the first timer, and the first message is a system message or dedicated signaling; or configuring timing duration for the first timer.

In a possible implementation method, the method further includes: sending first indication information to the second cell, where the first indication information indicates that the terminal device has switched to the second cell; and stopping the first timer after receiving second indication information from the second cell, where the second indication information indicates that the switching is completed.

In the foregoing solution, a manner in which the terminal device stops the first timer is provided. This helps the terminal device correctly determine whether the switching succeeds in the switching process, thereby improving a switching success rate.

In a possible implementation method, the method further includes: generating the first indication information after receiving a random access response from the second cell.

In a possible implementation method, the method further includes: receiving third indication information from the first cell, where the third indication information indicates random access-less switching; and generating the first indication information after the first time arrives.

In a possible implementation method, the first indication information is radio resource control RRC information or medium access control MAC layer information.

In a possible implementation method, the method further includes: receiving fourth indication information from the first cell, where the fourth indication information indicates a pre-configured uplink resource; and sending uplink data on the pre-configured uplink resource after the first time arrives.

In the foregoing solution, an uplink resource configuration manner is provided, and the uplink resource takes effect or is activated after the first time arrives, to reduce waste of an uplink resource.

In a possible implementation method, the method further includes: starting a second timer after the first time arrives, where the second timer indicates uplink timing alignment duration of the terminal device in the second cell.

In the foregoing solution, a manner of starting the second timer is provided. This helps the terminal device accurately determine time at which uplink timing alignment takes effect.

In a possible implementation method, the method further includes: receiving a second message from the first cell, where the second message includes timing duration of the second timer, and the second message is a system message or dedicated signaling; or configuring timing duration for the second timer.

In a possible implementation method, the method further includes: receiving fifth indication information from the first cell, where the fifth indication information indicates a manner of calculating a timing advance.

In the foregoing solution, a network device sends, to the terminal device, the fifth indication information that indicates the manner of calculating the timing advance. This helps the terminal device accurately determine the timing advance.

In a possible implementation method, the method further includes: after the first time arrives, triggering, when a difference between a first timing advance and a second timing advance is greater than or equal to a timing advance offset threshold, reporting of the first timing advance, where the first timing advance is a timing advance that is most recently determined, the second timing advance is a timing advance that is most recently reported to the first cell, and the timing advance offset threshold is from the first cell.

In the foregoing solution, this helps the terminal device correctly report a timing advance that is currently used.

In a possible implementation method, the method further includes: receiving sixth indication information, where the sixth indication information indicates whether a timing advance needs to be reported in the switching procedure without L3 signaling; and when the sixth indication information indicates that the timing advance needs to be reported in the switching procedure without L3 signaling, triggering reporting of a first timing advance, where the first timing advance is a timing advance that is most recently determined.

In the foregoing solution, this helps the terminal device correctly report the timing advance that is currently used.

In a possible implementation method, the method further includes: receiving a timing advance offset threshold from the second cell after the switching is completed; and triggering, based on the timing advance offset threshold, reporting of a first timing advance, where the first timing advance is a timing advance that is most recently determined.

In the foregoing solution, this helps the terminal device correctly report the timing advance that is currently used.

In a possible implementation method, the time information includes at least one of the following:

time at which the first cell stops providing a service;
time at which the second cell starts to provide a service;
time for downlink synchronization between the terminal device and the second cell; and
the first time at which the switching without L3 signaling takes effect.

In a possible implementation method, the method further includes: clearing a terminal device-level scheduling offset of the terminal device after the first time arrives.

In a possible implementation method, the method further includes: receiving a third message, where the third message includes a cell-level scheduling offset of the second cell, and the third message is a system message or dedicated signaling; and setting the scheduling offset of the terminal device as the cell-level scheduling offset of the second cell after the first time arrives.

In a possible implementation method, the method further includes: setting the scheduling offset of the terminal device as a cell-level scheduling offset of the first cell after the first time arrives.

In a possible implementation method, the method further includes: receiving dedicated signaling from the first cell, where the dedicated signaling includes a resource for non-contention-based random access.

In a possible implementation method, the method further includes: after the first time arrives or after performing switching from the first cell to the second cell, performing a random access procedure based on the resource for non-contention-based random access.

According to a second aspect, an embodiment of this application provides a communication method. The method may be performed by a network device or a module (for example, a chip) used in the network device. The method includes: sending time information, where the time information indicates first time at which switching without L3 signaling takes effect, and the time information is used by a terminal device to switch from a first cell to a second cell.

In the foregoing solution, the terminal device triggers, based on the received time information, to start a switching procedure without L3 signaling, so that the switching procedure without L3 signaling is correctly started. This helps the terminal device correctly perform cell switching.

In a possible implementation method, the method further includes: sending a first message, where the first message includes timing duration of a first timer, the terminal device determines, after the first timer expires, that the switching fails, and the first message is a system message or dedicated signaling.

In a possible implementation method, the method further includes: sending third indication information, where the third indication information indicates random access-less switching.

In a possible implementation method, the method further includes: sending fourth indication information, where the fourth indication information indicates a pre-configured uplink resource.

In a possible implementation method, the method further includes: sending a second message, where the second message includes timing duration of a second timer, the second timer indicates uplink timing alignment duration of the terminal device in the second cell, and the second message is a system message or dedicated signaling.

In a possible implementation method, the method further includes: sending fifth indication information, where the fifth indication information indicates a manner of calculating a timing advance.

In a possible implementation method, the time information includes at least one of the following:

time at which the first cell stops providing a service;
time at which the second cell starts to provide a service;
time for downlink synchronization between the terminal device and the second cell; and
the first time at which the switching without L3 signaling takes effect.

According to a third aspect, an embodiment of this application provides a communication apparatus. The apparatus may be a terminal device, or may be a module (for example, a chip) used in the terminal device. The apparatus has a function of implementing any one of the implementation methods of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network device, or may be a module (for example, a chip) used in the network device. The apparatus has a function of implementing any one of the implementation methods of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer instructions, and when the apparatus is run, the processor executes the computer instructions stored in the memory, to enable the apparatus to perform any one of the implementation methods of the first aspect and the second aspect.

According to a sixth aspect, an embodiment of this application provides a communication apparatus, including a unit or means (means) used to perform steps of any one of the implementation methods of the first aspect and the second aspect.

According to a seventh aspect, an embodiment of this application provides a communication apparatus, including a processor and an interface circuit. The processor is configured to: communicate with another apparatus through the interface circuit, and perform any one of the implementation methods of the first aspect and the second aspect. There are one or more processors.

According to an eighth aspect, an embodiment of this application provides a communication apparatus, including a processor coupled to a memory. The processor is configured to invoke a program stored in the memory, to perform any one of the implementation methods of the first aspect and the second aspect. The memory may be located inside or outside the apparatus. In addition, there may be one or more processors.

According to a ninth aspect, an embodiment of this application further provides a computer-readable storage medium. The computer-readable storage medium stores instructions, and when the instructions are run on a communication apparatus, any one of the implementation methods of the first aspect and the second aspect is performed.

According to a tenth aspect, an embodiment of this application further provides a computer program product. The computer program product includes a computer program or instructions. When the computer program or the instructions are run by a communication apparatus, any one of the implementation methods of the first aspect and the second aspect is performed.

According to an eleventh aspect, an embodiment of this application further provides a chip system, including a processor, configured to perform any one of the implementation methods of the first aspect and the second aspect.

According to a twelfth aspect, an embodiment of this application further provides a communication method, including: A network device sends time information, where the time information indicates first time at which switching without L3 signaling takes effect; and a terminal device performs switching from a first cell to a second cell based on the time information.

BRIEF DESCRIPTION OF DRAWINGS

FIG. 1 is a diagram of an architecture of a communication system to which an embodiment of this application is applied;

FIG. 2 is a diagram of a communication method according to an embodiment of this application;

FIG. 3 is an example diagram of satellite communication according to an embodiment of this application;

FIG. 4 is a diagram of a communication method according to an embodiment of this application;

FIG. 5 is a diagram of a communication method according to an embodiment of this application;

FIG. 6 is a diagram of a communication method according to an embodiment of this application;

FIG. 7 is a diagram of a communication method according to an embodiment of this application;

FIG. 8 is a diagram of a structure of a communication apparatus according to an embodiment of this application;

FIG. 9 is a diagram of a structure of a communication apparatus according to an embodiment of this application;

FIG. 10 is an example diagram of PUSCH transmission according to an embodiment of this application; and

FIG. 11 is another example diagram of PUSCH transmission according to an embodiment of this application.

## DESCRIPTION OF EMBODIMENTS

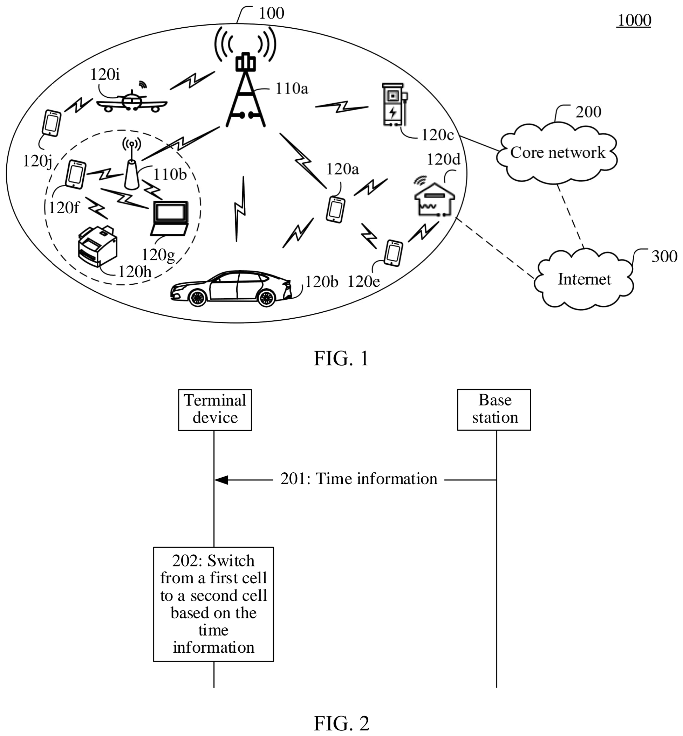

FIG. 1 is a diagram of an architecture of a communication system to which an embodiment of this application is applied. As shown in FIG. 1, a communication system 1000 includes a radio access network 100 and a core network 200. Optionally, the communication system 1000 may further include the Internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be different physical devices that are independent of each other, or a function of the core network device and a logical function of the radio access network device may be integrated into a same physical device, or some functions of the core network device and some functions of the radio access network device may be integrated into one physical device. Terminal devices may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not shown in FIG. 1.

The radio access network device is an access device through which the terminal device accesses the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to related technical specifications in the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the radio access network device is referred to as a network device for short, and the base station is used as an example of the radio access network device.

The terminal device is a device that has a wireless transceiver function, and may send a signal to the base station, or receive a signal from the base station. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an airplane, a ship, a robot, a mechanical arm, a smart home device, or the like. A specific technology and a specific device form that are used by the terminal device are not limited in embodiments of this application.

The base station and the terminal device may be at fixed locations, or may be movable. The base station and the terminal device may be deployed on the land, including an indoor device, an outdoor device, a handheld device, or a vehicle-mounted device; or may be deployed on a water surface; or may be deployed on an airplane, a balloon, or an artificial satellite. Application scenarios of the base station and the terminal device are not limited in embodiments of this application.

A role of the base station and a role of the terminal device may be relative to each other. For example, a helicopter or an uncrewed aerial vehicle 120i in FIG. 1 may be configured as a mobile base station. For those terminal devices 120j that access the radio access network 100 through 120i, the terminal device 120i is a base station. However, for a base station 110a, 120i is a terminal device, that is, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal device may be collectively referred to as communication apparatuses. 110a and 110b in FIG. 1 may be referred to as communication apparatuses functioning as the base station, and 120a to 120j in FIG. 1 may be referred to as communication apparatuses functioning as the terminal device.

Communication between the base station and the terminal device, communication between the base stations, and communication between the terminal devices may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal device may alternatively be performed by a module (for example, a chip or a modem) in the terminal device, or may be performed by an apparatus including the function of the terminal device.

In embodiments of this application, the base station sends a downlink signal or downlink information to the terminal device, and the downlink information is carried on a downlink channel. The terminal device sends an uplink signal or uplink information to the base station, and the uplink information is carried on an uplink channel. To communicate with the base station, the terminal device needs to establish a wireless connection to a cell controlled by the base station. The cell to which the terminal device establishes the wireless connection is referred to as a serving cell of the terminal device. When the terminal device communicates with the serving cell, the terminal device is further interfered with by a signal from a neighboring cell.

For ease of understanding of the present invention, the following describes nouns or terms in the present invention.

1. Non-terrestrial network (non-terrestrial network, NTN) communication

Because in a conventional terrestrial network (terrestrial network, TN), seamless coverage cannot be provided for a terminal device, especially in a place where a base station cannot be deployed, for example, in a sea, in a desert, or in the air, an NTN is introduced to a 5th generation (5th generation, 5G) system and a subsequent evolved system architecture like a 6th generation (6th generation, 6G) system. In the NTN, seamless coverage is provided for the terminal device by deploying a base station or some functions of the base station on a high-altitude platform or a satellite, to improve system reliability.

The satellite is used as an example in this application. Satellites are generally classified into the following two types based on operating modes of the satellites: A first type is a satellite with transparent forwarding. The satellite forwards a radio frequency signal of a base station located on the ground, and functions of the satellite are radio frequency filtering, frequency conversion, and frequency amplification, to regenerate a physical layer signal. A second type is a regenerative satellite. The satellite has all or some functions of a base station, that is, the base station or some functions of the base station are deployed on the satellite.

Based on a satellite altitude, namely, a satellite orbital altitude, satellites in a satellite system may be classified into a high-orbit satellite, a medium-orbit satellite, and a low-orbit satellite.

The high-orbit satellite is also referred to as a geostationary earth orbit (geostationary earth orbit, GEO) satellite. The satellite moves at the same speed as the earth rotation system. Therefore, the satellite is stationary relative to the ground. Correspondingly, a cell of the high-orbit satellite is also stationary. Coverage of the cell of the high-orbit satellite is large, and a diameter of the cell is generally 500 kilometers.

The low-orbit satellite and the medium-orbit satellite move at a higher speed relative to the ground. Therefore, coverage areas of services provided by the medium-orbit satellite and the low-orbit satellite also move. Cells covered by the medium-orbit satellite and the low-orbit satellite are classified into two types. A first type of cell is an earth-fixed cell (quasi-earth-fixed cell). A moving satellite adjusts a beam of the satellite to form a cell, and the formed cell is stationary in a period of time. A second type of cell is an earth-moving cell (earth-moving cell). A satellite does not dynamically adjust a beam direction of the satellite, and a cell covered by a beam of the satellite moves as the satellite moves. Regardless of a type of cell that provides coverage for the terminal device, high-speed movement of a satellite inevitably causes a problem that the terminal device needs to frequently switch to a new cell.

2. Layer 3 (L3) signaling switching

In a current switching procedure, L3 signaling is exchanged. For example, before switching, a source base station sends a switching command (for example, a radio resource control (radio resource control, RRC) reconfiguration message) to a terminal device. The switching command indicates the terminal device to perform switching. After the terminal device switches to a target base station, the terminal device sends a switching complete message (for example, an RRC reconfiguration complete message) to the target base station. The switching command and the switching complete message are both the L3 signaling.

3. Random access channel-less (random access channel-less, RACH-less)

A RACH-less procedure is introduced into release R14 in long term evolution (long term evolution, LTE). Specifically, random access may not be performed when a terminal device switches to a target cell, and the terminal device sends a switching complete message to a target base station after completing the switching.

In an L3 signaling switching procedure, the terminal device may access the target base station through a random access procedure, or may access the target base station in a RACH-less manner.

In some new application scenarios, switching without L3 signaling may be involved. The switching without L3 signaling means that the L3 signaling is not exchanged in the switching process. For example, a source base station does not send a switching command to the terminal device, and the terminal device does not send the switching complete message to the target base station. In this application, the switching without L3 signaling may be referred to as a different name, for example, switching without physical cell identifier (physical cell identifier, PCI) change. In the present invention, the switching without L3 signaling mainly refers to a scenario in which a terminal device in a connected state can switch, connected, or changed from a first cell to a second cell, without a need to send a switching command to the terminal device.

For example, in a scenario involving satellite communication, the switching without L3 signaling may be used. For example, in an earth-fixed cell scenario in the NTN, a satellite adjusts a beam of the satellite, so that an area covered by the beam remains unchanged in a period of time. Then, when a service cannot be provided, a next satellite provides coverage. In the scenario, a ground base station accessed by a terminal device remains unchanged. In the scenario, because the ground base station remains unchanged before and after the switching, and the satellite only has a signal amplification function, a PCI of the cell may not need to be changed before and after satellite switch, and L3 signaling switching does not need to be introduced either. The terminal device only needs to perform, after a new satellite arrives, downlink synchronization and uplink synchronization again with the new satellite, and configurations of the terminal device and the base station remain unchanged. In other words, before the switching, the terminal device accesses the ground base station through a source satellite, and after the switching, the terminal device accesses the same ground base station through the new satellite (namely, a target satellite). A cell configuration may remain unchanged, and the terminal device performs signal synchronization again with the ground base station through the target satellite. Therefore, the L3 signaling switching procedure may not need to be triggered, and such a switching procedure is a switching procedure without L3 signaling.

Certainly, in the earth-fixed cell scenario in the NTN, the terminal device may alternatively be allowed to change the PCI of the cell before and after switching. For example, the terminal device accesses a first cell of the ground base station before the switching, and accesses a second cell of the same ground base station after the switching, where a PCI of the first cell is different from a PCI of the second cell. In the scenario, the terminal device may switch from the first cell to the second cell through the switching procedure without L3 signaling. In the scenario, most configurations of the terminal device and the base station may remain unchanged, and only a small quantity of PCI-related configurations need to be changed. Therefore, the scenario is also applicable to the switching procedure without L3 signaling. It should be noted that the first cell before the switching and the second cell after the switching may alternatively belong to different ground base stations.

FIG. 2 is a diagram of a communication method according to an embodiment of this application. The method includes the following steps.

Step 201: A base station sends time information to a terminal device. Correspondingly, the terminal device receives the time information.

The time information indicates first time at which switching without L3 signaling takes effect.

The terminal device may receive, before accessing a first cell, the time information from the first cell or a base station to which the first cell belongs, for example, receive a system message (for example, a system information block (system information block, SIB)), where the system message includes the time information. Alternatively, the terminal device may receive dedicated signaling after accessing the first cell, where the dedicated signaling includes the time information.

In a satellite access scenario, the base station may be a ground base station, and the terminal device communicates with the ground base station through a satellite. Alternatively, the base station may be a satellite or a base station on the satellite that carries some or all functions of the base station, and the terminal device accesses the satellite or the base station on the satellite.

For example, the time information includes at least one of the following:

(1) Time at which the first cell stops providing a service.

In the satellite access scenario, the time at which the first cell stops providing the service may specifically be time at which a satellite currently accessed by the terminal device stops providing a service for a current coverage area.

(2) Time at which a second cell starts to provide a service.

In the satellite access scenario, the time at which the second cell starts to provide the service may specifically be time at which a next satellite to be accessed by the terminal device provides a service.

(3) Time for downlink synchronization between the terminal device and the second cell.

(4) The first time at which the switching without L3 signaling takes effect.

Step 202: The terminal device performs switching from the first cell to the second cell based on the time information.

The first cell and the second cell may be a same cell. In this case, there is no change on a PCI of a cell accessed by the terminal device. Alternatively, the first cell and the second cell are different cells. In this case, a PCI of a cell accessed by the terminal device changes.

A base station to which the second cell belongs and the base station to which the first cell belongs may be a same base station, or may be different base stations.

That the terminal device performs switching from the first cell to the second cell based on the time information may also be understood as follows: When the terminal device supports switching without L3 signaling, after the first time indicated by the time information arrives, the terminal device starts a switching procedure without L3 signaling, and performs switching from the first cell to the second cell. In the switching process, the terminal device performs downlink synchronization and/or uplink synchronization with the second cell.

In the foregoing solution, the terminal device triggers (triggers) or starts (performs) the switching procedure without L3 signaling based on the received time information, so that the switching procedure without L3 signaling is correctly started. This helps the terminal device correctly perform cell switching.

In an implementation method, before, after, or during step 201, the base station further sends an indication for switching without L3 signaling to the terminal device, to indicate the terminal device to perform switching without L3 signaling. In this case, step 202 is specifically as follows: The terminal device performs switching, based on the indication for switching without L3 signaling, from the first cell to the second cell after the first time indicated by the time information arrives. In the method, one piece of explicit indication information indicates the terminal device to perform the switching without L3 signaling. For example, the indication for switching without L3 signaling may be a Boolean value, or a PCI of the second cell, that is, the PCI of the second cell indicates to perform the switching without L3 signaling. For example, the indication for switching without L3 signaling and the time information may be carried in a same system message, or may be carried in different system messages. This is not limited in this application.

If the base station does not send the indication for switching without L3 signaling, the time information indicates the first time, and also implicitly indicates the terminal device to perform an indication for switching without L3 signaling.

In an implementation method, after the first time arrives, the terminal device starts a first timer (which may also be referred to as a T304 timer or have another name), and the first timer is configured to monitor whether the terminal device successfully performs random access or completes switching in a target cell (namely, the second cell) within timing duration of the first timer.

For example, after switching to the second cell, the terminal device sends first indication information to the second cell, where the first indication information indicates that the terminal device has switched to the second cell. If the terminal device receives, from the second cell before the first timer expires, second indication information indicating that the switching is completed, the terminal device stops the first timer, and determines that the switching is completed or random access succeeds. If the terminal device does not receive the second indication information before the first timer expires, it indicates that the terminal device determines that the switching fails. In other words, after the first timer expires, the terminal device determines that the switching fails or the random access fails.

In an implementation method, in a scenario in which the switching procedure without L3 signaling and a random access procedure are combined with each other, the terminal device may generate the first indication information after receiving a random access response from the second cell.

In another implementation method, in a scenario in which the switching procedure without L3 signaling and RACH-less are combined with each other, if the terminal device receives third indication information that indicates random access-less (RACH-less) switching, the terminal device may generate the first indication information after the first time indicated by the time information arrives. For example, the third indication information and the time information may be carried in a same system message and sent to the terminal device.

For example, the first indication information may be RRC information or medium access control (medium access control, MAC) layer information. The RRC information may be terminal device assistance information. The MAC layer information may include at least one of the following information: a cell radio network temporary identifier (cell radio network temporary identifier, C-RNTI), a medium access control control element (medium access control control element, MAC CE), a power headroom report (power headroom report, PHR) MAC CE, or a timing advance report (timing advance report, TAR) MAC CE. Alternatively, the MAC layer information is a newly defined MAC CE. When there is uplink data, the MAC layer information may alternatively be a MAC protocol data unit (protocol data unit, PDU).

For example, in a switching process without L3 signaling, the MAC layer information has a highest priority, and the terminal device sends other information only after sending the MAC layer information and receiving the second indication information from the second cell.

Optionally, the MAC layer information is applicable to a hybrid automatic repeat request (hybrid automatic repeat request, HARQ) mode A (ModeA).

In an implementation method, an RRC layer of the terminal sends first information to a MAC layer, where the first information indicates the MAC layer to make a RACH-less procedure during switching without L3 signaling take effect (or perform the RACH-less procedure during switching without L3 signaling take effect), and the first information may be the foregoing indication for switching without L3 signaling and/or time information. After receiving the first information, the MAC layer generates the first indication information, and the first indication information is the MAC layer information.

In another implementation method, an RRC layer of the terminal device is configured with a MAC layer to avoid performing random access, or the RRC layer of the terminal device is configured with the MAC layer to avoid performing random access in a switching process. The MAC layer features a random access-less configuration and generates the first indication information, and the first indication information is the MAC layer information.

For example, the second indication information may be a MAC CE used for conflict resolution, or newly transmitted information of downlink data.

In an implementation method, the terminal device further receives a first message from the first cell, where the first message includes the timing duration of the first timer, and the first message may be a system message or dedicated signaling. For example, duration of the first timer and the foregoing time information may be carried in a same system message for sending.

In another implementation method, the terminal device configures timing duration for the first timer. For example, the terminal device may reuse, as the timing duration of the first timer, timing duration of the T304 timer used in the first cell, or the terminal device reallocates timing duration to the first timer.

In an implementation method, the terminal device may not reset a MAC entity in a process of performing switching without L3 signaling. In an implementation, for a specific action of resetting the MAC entity, refer to section 5.12 in the 3GPP protocol TS38.321. It should be noted that an operation that the terminal device does not reset the MAC entity may be decoupled from another operation described in the present invention. In other words, the operation that the terminal device does not reset the MAC entity in the process of performing the switching without L3 signaling does not depend on any other operation in the present invention.

For example, the terminal device does not reset the MAC entity, considers a time alignment timer (time-AlignmentTimer) as expired, and performs an action after the time alignment timer expires. In the present invention, after the time alignment timer expires, if the time alignment timer corresponds to a primary timing alignment group, the terminal device flushes some or all of HARQ buffers of a serving cell, and the MAC layer of the terminal device notifies the RRC layer of the terminal device to release some or all of uplink physical control channel (physical uplink control channel, PUCCH) resources of the serving cell, release some or all of sounding reference signal (sounding reference signal, SRS) resources, clear some or all of configured downlink and uplink grants, clear an uplink physical shared channel resource used for semi-persistent channel state indication reporting, and the like. For detailed descriptions, refer to section 5.2 in the 3GPP protocol TS 38.321.

For example, the terminal device does not reset the MAC entity, stops the time alignment timer, and initiates a random access procedure or a random access-less procedure.

In an implementation method, the terminal device further receives fourth indication information from the first cell, and the fourth indication information indicates a pre-configured uplink resource. In other words, the terminal device further receives the pre-configured uplink resource from the first cell. After the first time indicated by the time information arrives, the terminal device sends uplink data to the second cell on the pre-configured uplink resource. In other words, the pre-configured uplink resource starts to take effect or be activated after the first time indicated by the time information arrives. Before the first time arrives, the pre-configured uplink resource is not activated, and the terminal device cannot use the uplink resource to send data for the switching without L3 signaling. The terminal device sends the uplink data to the second cell on a 1st available

pre-configured uplink resource after the first time arrives.

In an implementation method, the fourth indication information further indicates that the pre-configured uplink resource is used for avoiding performing random access during the switching without L3 signaling, or indicates that the pre-configured uplink resource is used for avoiding performing random access. Alternatively, the terminal device further receives one piece of separate indication information, where the indication information indicates that the pre-configured uplink resource is used for avoiding performing random access during the switching without L3 signaling, or indicates that the pre-configured uplink resource is used for avoiding performing random access.

The pre-configured uplink resource may be a reused resource with another feature. When the terminal device needs to use the resource, the resource may be used by the terminal device. Alternatively, the pre-configured uplink resource may be separately allocated to the terminal device in a switching procedure without L3 signaling, or may be separately allocated to the terminal device in the scenario in which the switching procedure without L3 signaling and RACH-less are combined with each other. The fourth indication information may be carried in an independent RRC message, or may be associated with another configured RRC message. Therefore, there is no need to separately add a new RRC message, thereby reducing signaling overheads.

For example, if the fourth indication information is associated with the another configured RRC message for sending, the RRC message does not include a reconfiguration WithSync information element. The reason is that the reconfiguration WithSync information element is used to trigger common switching, that is, L3 signaling switching, but in the present invention, the switching without L3 signaling needs to be triggered, so that the reconfiguration WithSync information element may be deleted. It should be noted that, if other information in embodiments of this application is associated with the another configured RRC message, the reconfiguration-WithSync information element may also be deleted from the corresponding RRC message.

In an implementation method, the fourth indication information further indicates a correspondence between the pre-configured uplink resource and a synchronization signal block (synchronization signal block, SSB) beam (beam) of the second cell.

For example, the terminal device may select a corresponding resource by determining a beam of a synchronization signal block.

In an implementation method, after the first time indicated by the time information arrives, the terminal device starts a second timer (also referred to as the time alignment timer). The second timer indicates uplink timing alignment duration of the terminal device in the second cell. A timing advance (timing advance, TA) currently used by the terminal device is valid within timing duration of the second timer. If the second timer expires, the terminal device considers that uplink out-of-synchronization occurs, and synchronization needs to be performed again with the base station; or the base station considers that uplink out-of-synchronization occurs on the terminal device, and synchronization needs to be performed again with the terminal device. Subsequently, if the terminal device receives a timing advance command (Timing Advance Command) MAC CE, an absolute timing advance command (Absolute Timing Advance Command) MAC CE, or the random access response (Random Access Response) from the second cell, the terminal device recalculates a TA and restarts the second timer.

For example, after the first time indicated by the time information arrives, the RRC layer of the terminal device indicates the MAC layer to start the second timer.

For example, in a RACH-less scenario, after the first time indicated by the time information arrives, the terminal device starts the second timer. In a random access scenario, the terminal device starts the second timer after receiving the random access response.

In an implementation method, the terminal device further receives a second message from the first cell, where the second message includes the timing duration of the second timer, and the second message is a system message or dedicated signaling. Alternatively, the terminal device configures timing duration for the second timer. For example, the timing duration of the first timer and the time information and/or the timing duration of the first timer may be carried in a same system message.

In an implementation method, the terminal device may further use, in the second cell, a time alignment timer used in the first cell. The time alignment timer used in the first cell is referred to as a third timer below. The third timer may indicate uplink timing alignment duration of the terminal device in the first cell, or may indicate the uplink timing alignment duration of the terminal device in the second cell. When the third timer indicates the uplink timing alignment duration of the terminal device in the second cell, the terminal device starts the third timer after the first time indicated by the time information arrives. For example, in the RACH-less scenario, the terminal device starts the third timer after the first time indicated by the time information arrives.

In an implementation method, the terminal device further receives fifth indication information from the first cell, and the fifth indication information indicates a manner of calculating a timing advance TA. The terminal device determines, based on the fifth indication information, a first timing advance used in the second cell. After the first time indicated by the time information arrives, the terminal device enables the first timing advance and starts the second timer, which indicates that the first timing advance starts to take effect and is valid within the timing duration of the second timer.

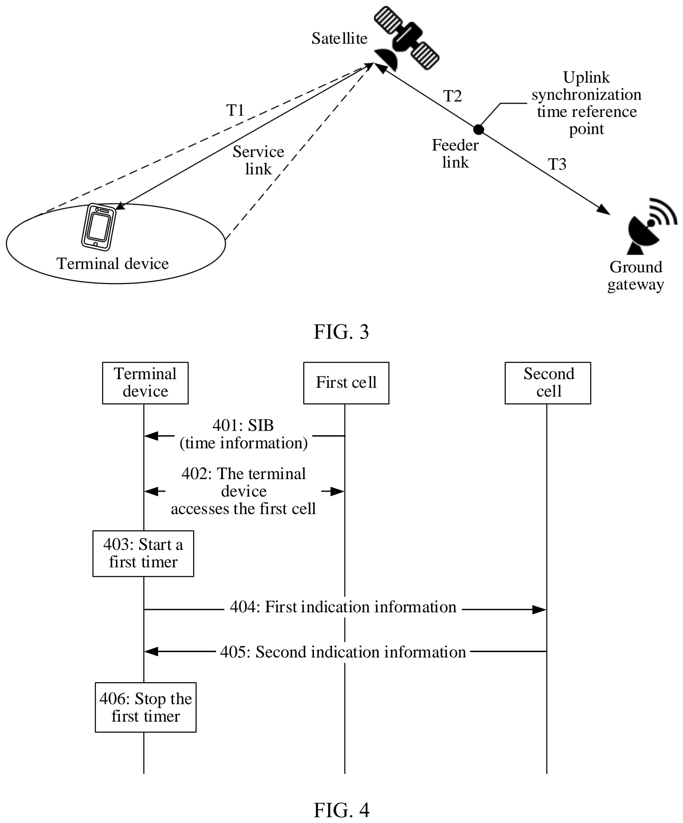

FIG. 3 is an example diagram of satellite communication according to an embodiment of this application. A link between a terminal device and a satellite is referred to as a service link, and round trip time (round trip time, RTT) between the satellite and the terminal device is represented by T1. A link between the satellite and a ground gateway is referred to as a feeder link. The feeder link is divided into two parts based on an uplink time synchronization reference point: round trip time (which is represented by T2) between the satellite and the uplink time synchronization reference point, and round trip time (which is represented by T3) between the uplink time synchronization reference point and the ground gateway. Control or compensation is usually performed on the round trip time between the uplink time synchronization reference point and the ground gateway by a base station. In a satellite transparent forwarding architecture, the satellite does not have a function of the base station, and the terminal device needs to calculate T2. In a satellite regeneration architecture, the satellite carries some or all functions of the base station, T2 and T3 are 0, and therefore, the terminal device does not need to calculate T2.

In an implementation method, the terminal device calculates a timing advance TA according to the following formula:

$$TA = T1 + T2 + N_{TA} + N_{TA\,offset}$$

$N_{TA}$ is determined based on an absolute value parameter (also referred to as an absolute value of the TA or an absolute value parameter of the TA) or an adjustment value parameter (also referred to as an adjustment value of the TA or an adjustment value parameter of the TA), and the absolute value parameter or the adjustment value parameter of $N_{TA}$ is from the base station or is a default value. $N_{TA\,offset}$ represents a fixed value related to an operating band, and $N_{TA\,offset}$ may be obtained based on a system message from the base station, for example, may be configured by using a timing advance offset information element (also referred to as an n-timing advance offset) in the system message, or may be a default value.

For example, the terminal device calculates the first timing advance according to the formula.

For example, the fifth indication information may include at least one of a TA, T1, T2, $N_{TA}$, an absolute value parameter, an adjustment value parameter, or $N_{TA\,offset}$, and the terminal device calculates the first timing advance (namely, the TA) based on the fifth indication information. For example, the fifth indication information includes the TA. If the terminal device uses the TA, the first timing advance determined by the terminal device is equal to the TA. For another example, the fifth indication information includes the absolute value parameter, the terminal device calculates $N_{TA}$ by using the absolute value parameter, and the terminal device determines values of T1, T2, and $N_{TA\,offset}$, to determine a TA based on $N_{TA}$, T1, T2, and $N_{TA}$ *offset,* where the TA is the first timing advance. For another example, the fifth indication information includes T1, the terminal device uses T1, and the terminal device determines T2, $N_{TA}$ and $N_{TA\,offset}$, to determine a TA based on $N_{TA}$, T1, T2, and $N_{TA\,offset}$, where the TA is the first timing advance. For another example, the fifth indication information includes T2, the terminal device uses T2, and the terminal device determines T1, $N_{TA}$, and $N_{TA\,offset}$ to determine a TA based on $N_{TA}$, T1, T2, and $N_{TA}$ *offset,* where the TA is the first timing advance.

For example, if the fifth indication information indicates that the terminal device determines a timing advance, the terminal device calculates the first timing advance in a pre-configured manner or a default manner.

The following describes three different implementation methods for triggering the terminal device to report the first timing advance used in a second cell. That the terminal device reports the first timing advance may also be referred to as that the terminal device reports a timing advance report (TA report).

Method 1: The terminal device determines, based on a second timing advance used in a first cell and a timing advance offset threshold, whether to report the first timing advance used in the second cell.

In an implementation method, after the first time indicated by the time information arrives, reporting of the first timing advance is triggered when a difference between the first timing advance and the second timing advance is greater than or equal to the timing advance offset threshold (offsetThresholdTA). The first timing advance is a timing advance that is most recently determined, that is, the first timing advance is a current or latest timing advance used for communication between the terminal device and the second cell. The second timing advance is a timing advance that is most recently reported to the first cell. That the second timing advance is used for communication between the terminal device and the first cell may also be understood as follows: The second timing advance is a latest timing advance that is reported by the terminal device in the first cell. The timing advance offset threshold is from the first cell. The terminal device reports the first timing advance and the second timing advance in a timing advance reporting procedure.

Method 2: The terminal device determines, based on received indication information that indicates whether a timing advance needs to be reported, whether to report the first timing advance used in the second cell.

In an implementation method, the terminal device further receives sixth indication information from the first cell or the second cell, where the sixth indication information indicates whether a timing advance or a timing advance report needs to be reported in a switching procedure without L3 signaling. When the sixth indication information indicates that the timing advance needs to be reported in the switching procedure without L3 signaling, reporting of the first timing advance is triggered. The first timing advance is a timing advance that is most recently determined, that is, the first timing advance is a current or latest timing advance used for communication between the terminal device and the second cell.

For example, in a scenario in which switching without L3 signaling and random access are combined with each other, the terminal device may report the first timing advance to the second cell in a random access procedure. In a scenario in which switching without L3 signaling and RACH-less are combined with each other, the terminal device may report the first timing advance to the second cell based on the sixth indication information after completing cell switching, after a first timer stops, after completing uplink synchronization with the second cell, after the terminal device can send uplink data to the second cell, or after the first time indicated by the first time information arrives.

Method 3: After switching to the second cell, the terminal device triggers, based on a timing advance offset threshold from the second cell, reporting of the first timing advance used in the second cell.

In an implementation method, the terminal device receives the timing advance offset threshold from the second cell after the switching is completed. In this case, the terminal device triggers, based on the timing advance offset threshold, reporting of the first timing advance. The reason is that the terminal device has not reported a timing advance in the second cell, so that the terminal device does not need to determine whether a difference for a change in the timing advance is greater than the advance offset threshold, but directly reports the first timing advance that is most recently determined in the second cell. The first timing advance is a timing advance that is most recently determined, that is, the first timing advance is a current or latest timing advance used for communication between the terminal device and the second cell.

For example, in the scenario in which switching without L3 signaling and random access are combined with each other, the terminal device may report the first timing advance to the second cell after completing random access. In the scenario in which switching without L3 signaling and RACH-less are combined with each other, the terminal device may report the first timing advance to the second cell after completing cell switching, after the first timer stops, after completing uplink synchronization with the second cell, after the terminal device can send the uplink data to the second cell, or after the first time indicated by the first time information arrives.

In an implementation method, the first timing advance reported by the terminal device to the second cell may be used as a flag indicating that uplink synchronization between the terminal device and the second cell succeeds or the switching succeeds. In other words, the first timing advance may be used as a specific implementation of the foregoing first indication information.

The following embodiments in FIG. 4 to FIG. 7 are specific examples of the foregoing embodiment in FIG. 2.

FIG. 4 is a schematic flowchart of a communication method according to an embodiment of this application. The method includes the following steps.

Step 401: A base station to which a first cell belongs sends a SIB through broadcasting. Correspondingly, a terminal device receives the SIB.

The SIB includes time information, and optionally, further includes indication for switching without L3 signaling.

Step 402: The terminal device accesses the first cell.

If the terminal device initiates a connection and successfully accesses the first cell, the terminal device enters an RRC connected state.

Step 403: After first time indicated by the time information arrives, the terminal device starts a first timer.

Step 404: The terminal device generates first indication information, and sends the first indication information to a base station to which a second cell belongs.

Step 405: The base station to which the second cell belongs sends second indication information to the terminal device.

Step 406: The terminal device stops the first timer based on the second indication information.

For meanings, functions, and implementations of the time information, the indication for switching without L3 signaling, the first timer, the first indication information, and the second indication information, refer to the descriptions in the foregoing embodiment in FIG. 2. Details are not described again.

In this embodiment in FIG. 4, because the switching is performed without L3 signaling, a signaling storm for switching and a switching delay are reduced. In addition, manners of starting and stopping the first timer in a procedure without L3 signaling are provided.

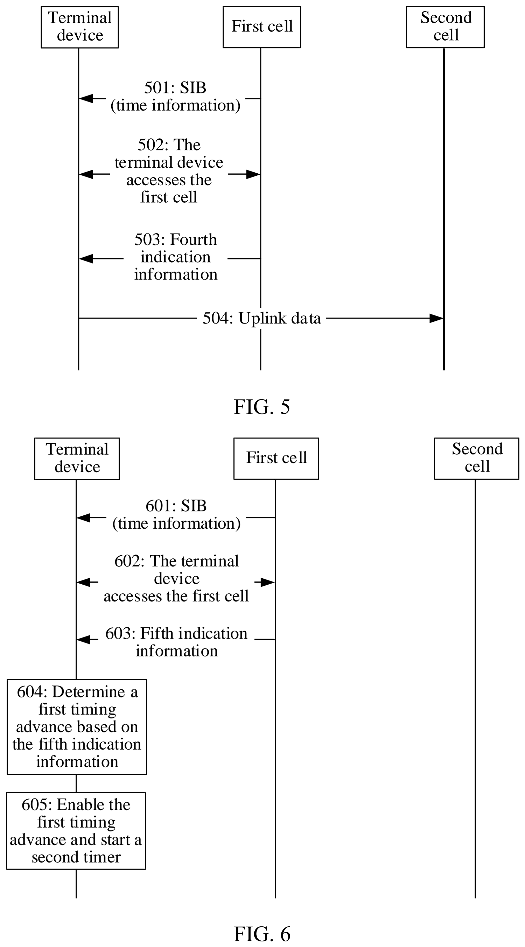

FIG. 5 is a schematic flowchart of a communication method according to an embodiment of this application. The method includes the following steps.

Step 501: A base station to which a first cell belongs sends a SIB through broadcasting. Correspondingly, a terminal device receives the SIB.

The SIB includes time information, and optionally, further includes indication for switching without L3 signaling.

Step 502: The terminal device accesses the first cell.

If the terminal device initiates a connection and successfully accesses the first cell, the terminal device enters an RRC connected state.

Step 503: The base station to which the first cell belongs sends fourth indication information to the terminal device.

Step 504: After first time indicated by the time information arrives, the terminal device sends, on an uplink resource indicated by the fourth indication information, uplink data to a base station to which a second cell belongs.

For meanings, functions, and implementations of the time information, the indication for switching without L3 signaling, and the fourth indication information, refer to the descriptions in the foregoing embodiment in FIG. 2. Details are not described again.

In this embodiment in FIG. 5, because the switching is performed without L3 signaling, a signaling storm for switching and a switching delay are reduced. In addition, a manner about how the uplink resource is pre-allocated and takes effect is provided, and the switching delay and resource conflicts are further reduced.

FIG. 6 is a schematic flowchart of a communication method according to an embodiment of this application. The method includes the following steps.

Step 601: A base station to which a first cell belongs sends a SIB through broadcasting. Correspondingly, a terminal device receives the SIB.

The SIB includes time information and fifth indication information, and optionally, further includes indication for switching without L3 signaling.

Step 602: The terminal device accesses the first cell.

If the terminal device initiates a connection and successfully accesses the first cell, the terminal device enters an RRC connected state.

Step 603: The base station to which the first cell belongs sends the fifth indication information to the terminal device.

Step 604: The terminal device determines a first timing advance based on the fifth indication information.

Step 605: After first time indicated by the time information arrives, enable the first timing advance and start a second timer.

The first timing advance is valid within timing duration of a first timer.

For meanings, functions, and implementations of the time information, the indication for switching without L3 signaling, the first timing advance, and the fifth indication information, refer to the descriptions in the foregoing embodiment in FIG. 2. Details are not described again.

In this embodiment in FIG. 6, because the switching is performed without L3 signaling, a signaling storm for switching and a switching delay are reduced. In addition, a manner of starting the second timer is provided.

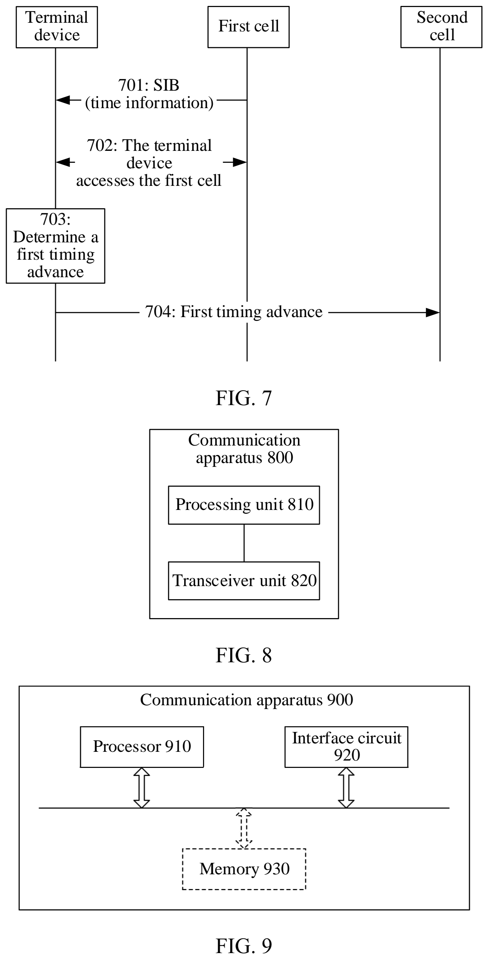

FIG. 7 is a schematic flowchart of a communication method according to an embodiment of this application. The method includes the following steps.

Step 701: A base station to which a first cell belongs sends a SIB through broadcasting. Correspondingly, a terminal device receives the SIB.

The SIB includes time information, and optionally, further includes indication for switching without L3 signaling.

Step 702: The terminal device accesses the first cell.

If the terminal device initiates a connection and successfully accesses the first cell, the terminal device enters an RRC connected state.

Step 703: The terminal device determines a first timing advance.

Step 704: The terminal device sends the first timing advance to a base station to which a second cell belongs.

For meanings, functions, and implementations of the time information, the indication for switching without L3 signaling, and the first timing advance, refer to the descriptions in the foregoing embodiment in FIG. 2. Details are not described again.

For a specific implementation method for reporting the first timing advance by the terminal device, refer to the three different implementation methods reporting the first timing advance that are described in the foregoing embodiment in FIG. 2. In other words, the terminal device determines, based on a second timing advance used in the first cell and a timing advance offset threshold, to report the first timing advance used in the second cell. Alternatively, the terminal device determines, based on received sixth indication information that indicates that a timing advance needs to be reported, to report the first timing advance used in the second cell. Alternatively, after switching to the second cell, the terminal device triggers, based on a timing advance offset threshold from the second cell, to report the first timing advance used in the second cell.

In this embodiment in FIG. 7, because the switching is performed without L3 signaling, a signaling storm for switching and a switching delay are reduced. In addition, a manner of reporting the first timing advance is provided.

To cope with a long transmission delay in a non-terrestrial network (NTN), a parameter Koffset is introduced in the NTN as a scheduling offset for the NTN in comparison with a terrestrial network (TN). Koffset generally needs to be greater than or equal to a sum of T1 and T2. For meanings of T1 and T2, refer to related descriptions in FIG. 3.

Koffset may be used to adjust the following time: transmission time for a physical random access channel (physical random access channel, PRACH) triggered by a PDCCH, transmission time for a physical uplink shared channel (physical uplink shared channel, PUSCH) scheduled by using a random access response (random access response, RAR) or a fallback random access response (fallback random access response, fallback-RAR), transmission time of a hybrid automatic repeat request acknowledgement (hybrid automatic repeat request ack, HARQ-ACK) on the PUSCH, transmission time for a PUSCH triggered by the PDCCH, and the like.

For ease of description, the following uses an example in which Koffset is used to adjust the transmission time for the PUSCH triggered by the PDCCH for description.

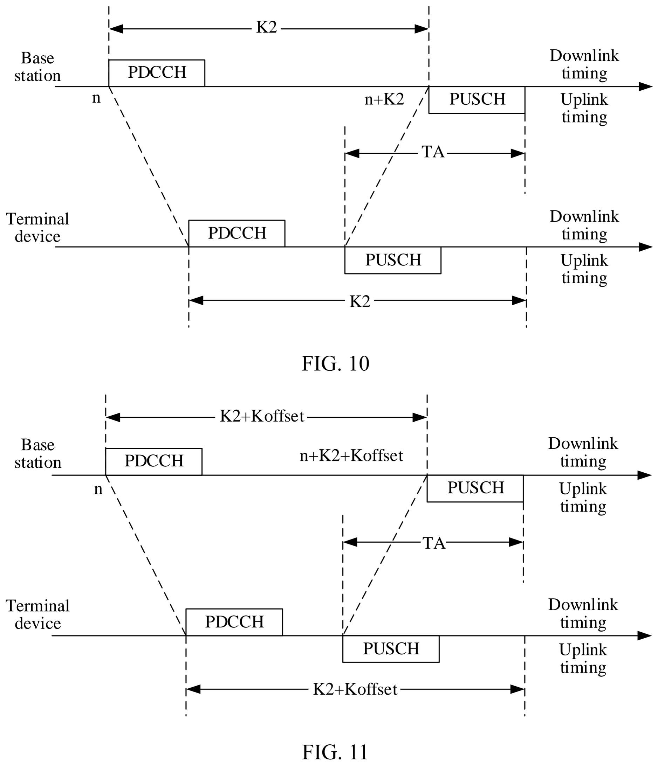

FIG. 10 is an example diagram of PUSCH transmission according to an embodiment of this application. The example is applied to a TN scenario. A base station sends a PDCCH in a slot n, and DCI of the PDCCH is used to schedule transmission time for a PUSCH. Specifically, the DCI indicates a slot offset K2, indicating that the base station expects to receive the PUSCH from a terminal device at a time point (n+K2). After obtaining K2, the terminal device calculates, based on a timing advance TA and K2, time for sending the PUSCH, and then sends the PUSCH to the base station. $K2 > TA + T_{proc,2}$, where $T_{proc,2}$ is preparation duration of the PUSCH, and specifically indicates a delay T for processing the received PDCCH and generating the PUSCH by the terminal device.

In an NTN, considering that a transmission delay between the terminal device and the base station is long, the base station indicates, to the terminal device, time at which the base station expects to receive the PUSCH is n+k2+Koffset. FIG. 11 is another example diagram of PUSCH transmission according to an embodiment of this application. The example is applied to an NTN scenario. A base station sends a PDCCH in a slot n, and DCI of the PDCCH is used to schedule transmission time for a PUSCH. Specifically, the DCI indicates a slot offset K2, indicating that the base station expects to receive the PUSCH from a terminal device at a time point (n+K2+Koffset). After obtaining K2, the terminal device calculates, based on a timing advance TA, Koffset, and K2, time for sending the PUSCH, and then sends the PUSCH to the base station. $K2 + Koffset > TA + T_{proc,2}$, where $T_{proc,2}$ is preparation duration of the PUSCH, and specifically indicates a delay for processing the received PDCCH and generating the PUSCH by the terminal device.

Koffset introduced in the NTN scenario is classified into cell-level Koffset (which is represented by Kcelloffset) and terminal device-level Koffset (which is represented by Kueoffset). Kcelloffset is delivered to the terminal device in a system message. Before initial access, there is only Kcelloffset for the terminal device. Therefore, in FIG. 11, Koffset=Kcelloffset. After initial access, the terminal device reports an estimated TA value of the terminal device to the base station based on a timing advance reporting (TAR) procedure. The base station performs calculation on terminal device-level differential Koffset based on the estimated TA value, to obtain Kueoffset, and sends Kueoffset to the terminal device via a medium access control control element (medium access control control element, MAC CE). The terminal device determines Koffset based on Kueoffset. Specifically, Koffset = Kcelloffset - Kueoffset. Koffset is Koffset in FIG. 11.

With reference to embodiments in FIG. 2 and FIG. 4 to FIG. 7 of this application, in a switching scenario without PCI change, because a source satellite and a target satellite change before and after the switching, Kueoffset that is sent by a source cell (namely, a first cell) to the terminal device cannot be used in a switching procedure without PCI change, regardless of RACH switching or RACH-less switching. Therefore, in this embodiment of this application, it is proposed that the terminal device may clear Kueoffset when switching without PCI change is performed. Further, Kueoffset may be cleared by a MAC layer of the terminal device.

When performing the switching without PCI change, the terminal device may determine, in any one of the following manners, Koffset used in a target cell:

Manner 1: Kcelloffset used by the terminal device remains unchanged. In other words, the terminal device continues to use or reuses Kcelloffset received in a system message of the source cell, that is, Koffset=Kcelloffset, where Kcelloffset is a cell-level scheduling offset of the first cell (or the source cell), and may also be used as a cell-level scheduling offset of a second cell (or the target cell).

Manner 2: The source cell broadcasts Kcelloffset of the target cell in the system message, and Koffset=Kcelloffset, where Kcelloffset is also referred to as a cell-level scheduling offset of the second cell (or the target cell).

Optionally, Kcelloffset is included in ephemeris information of the target cell, that is, included in NTN-config of the target cell.

Manner 3: The source cell sends Kcelloffset of the target cell in dedicated signaling, and Koffset=Kcelloffset, where Kcelloffset is also referred to as a cell-level scheduling offset of the second cell (or the target cell).

The dedicated signaling is not a switching command, that is, the dedicated signaling does not include an RRCwithsync field. For example, the dedicated signaling is an RRC reconfiguration message that does not include the RRCwithsync field.

Based on any one of Manner 1 to Manner 3, Koffset of the target cell in the switching without PCI change may be determined.

In an implementation method, this embodiment of this application further provides a method for a random access resource. The method may be combined with any one of the foregoing embodiments, or may be separately implemented. Specifically, the random access resource includes a resource used for contention-based random access and a resource used for non-contention-based random access. In a current common switching scenario (namely, an L3 signaling switching), the resource for contention-based random access and/or the resource for non-contention-based random access may be configured in a switching command. However, there is no switching command in the switching scenario without PCI change. Therefore, this embodiment of this application proposes that the base station may send the resource for non-contention-based random access to the terminal device in the dedicated signaling of the source cell; the terminal device does not make the resource for non-contention-based random access take effect in the source cell; and when the terminal device switches to the target cell, or when performing the switching without PCI change when first time arrives, the terminal device may use the resource for non-contention-based random access to perform a random access procedure. In addition, the base station may further send the resource for contention-based random access in the system message of the source cell, or the terminal device reuses the resource that is for contention-based random access and that is of the source cell to initiate a random access procedure to the target cell. The dedicated signaling may be an RRC reconfiguration message that does not include a Reconfiguration WithSync information element.

It may be understood that, to implement the functions in the foregoing embodiments, the base station and the terminal device include corresponding hardware structures and/or software modules for performing the functions. A person skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

FIG. 8 and FIG. 9 are diagrams of structures of possible communication apparatuses according to embodiments of this application. These communication apparatuses may be configured to implement functions of the terminal device or the base station in the foregoing method embodiments, and therefore can also achieve beneficial effects of the foregoing method embodiments. In embodiments of this application, the communication apparatus may be one of the terminal devices 120a to 120j shown in FIG. 1, or may be the base station 110a or 110b shown in FIG. 1, or may be a module (for example, a chip) used in the terminal device or the base station.

A communication apparatus 800 shown in FIG. 8 includes a processing unit 810 and a transceiver unit 820. The communication apparatus 800 is configured to implement functions of the terminal device or the base station in the foregoing method embodiments.

When the communication apparatus 800 is configured to implement a function of the terminal device in the foregoing method embodiments, the transceiver unit 820 is configured to receive time information from a first cell, where the time information indicates first time at which switching without L3 signaling takes effect. The processing unit 810 is configured to switch from the first cell to a second cell based on the time information.

In a possible implementation method, the processing unit 810 is further configured to start a first timer after the first time arrives, where the terminal device determines, after the first timer expires, that the switching fails.

In a possible implementation method, the transceiver unit 820 is further configured to: receive a first message from the first cell, where the first message includes timing duration of the first timer, and the first message is a system message or dedicated signaling; or configure timing duration for the first timer.

In a possible implementation method, the transceiver unit 820 is further configured to send first indication information to the second cell, where the first indication information indicates that the terminal device has switched to the second cell. The processing unit 810 is further configured to stop the first timer after the transceiver unit 820 receives second indication information from the second cell, where the second indication information indicates that the switching is completed.

In a possible implementation method, the processing unit 810 is further configured to generate the first indication information after the transceiver unit 820 receives a random access response from the second cell.

In a possible implementation method, the transceiver unit 820 is further configured to receive third indication information from the first cell, where the third indication information indicates random access-less switching. The processing unit 810 is further configured to generate the first indication information after the first time arrives.

In a possible implementation method, the transceiver unit 820 is further configured to: receive fourth indication information from the first cell, where the fourth indication information indicates a pre-configured uplink resource; and send uplink data on the pre-configured uplink resource after the first time arrives.

In a possible implementation method, the processing unit 810 is further configured to start a second timer after the first time arrives, where the second timer indicates uplink timing alignment duration of the terminal device in the second cell.

In a possible implementation method, the transceiver unit 820 is further configured to receive a second message from the first cell, where the second message includes timing duration of the second timer, and the second message is a system message or dedicated signaling. Alternatively, the processing unit 810 is further configured to configure timing duration for the second timer.

In a possible implementation method, the method further includes: receiving fifth indication information from the first cell, where the fifth indication information indicates a manner of calculating a timing advance.

In a possible implementation method, the transceiver unit 820 is further configured to: after the first time arrives, trigger, when a difference between a first timing advance and a second timing advance is greater than or equal to a timing advance offset threshold, reporting of the first timing advance, where the first timing advance is a timing advance that is most recently determined, the second timing advance is a timing advance that is most recently reported to the first cell, and the timing advance offset threshold is from the first cell.

In a possible implementation method, the transceiver unit 820 is further configured to: receive sixth indication information, where the sixth indication information indicates whether a timing advance needs to be reported in a switching procedure without L3 signaling; and when the sixth indication information indicates that the timing advance needs to be reported in the switching procedure without L3 signaling, trigger reporting of a first timing advance, where the first timing advance is a timing advance that is most recently determined.

In a possible implementation method, the transceiver unit 820 is further configured to: receive a timing advance offset threshold from the second cell after the switching is completed; and trigger, based on the timing advance offset threshold, reporting of a first timing advance, where the first timing advance is a timing advance that is most recently determined.

In a possible implementation method, the processing unit 810 is further configured to clear a terminal device-level scheduling offset of the terminal device after the first time arrives.

In a possible implementation method, the transceiver unit 820 is further configured to receive a third message, where the third message includes a cell-level scheduling offset of the second cell, and the third message is a system message or dedicated signaling. The processing unit 810 is further configured to: set the scheduling offset of the terminal device as the cell-level scheduling offset of the second cell after the first time arrives.

In a possible implementation method, the processing unit 810 is further configured to: set the scheduling offset of the terminal device as a cell-level scheduling offset of the first cell after the first time arrives.

When the communication apparatus 800 is configured to implement a function of the base station in the foregoing method embodiments, the processing unit 810 is configured to control the transceiver unit 820 to send time information, where the time information indicates first time at which switching without L3 signaling takes effect, and the time information is used by a terminal device to switch from a first cell to a second cell.

In a possible implementation method, the processing unit 810 is configured to control the transceiver unit 820 to send a first message, where the first message includes timing duration of a first timer, the terminal device determines, after the first timer expires, that the switching fails, and the first message is a system message or dedicated signaling.

In a possible implementation method, the processing unit 810 is configured to control the transceiver unit 820 to send third indication information, where the third indication information indicates random access-less switching.

In a possible implementation method, the processing unit 810 is configured to control the transceiver unit 820 to send fourth indication information, where the fourth indication information indicates a pre-configured uplink resource.

In a possible implementation method, the processing unit 810 is configured to control the transceiver unit 820 to send a second message, where the second message includes timing duration of a second timer, the second timer indicates uplink timing alignment duration of the terminal device in the second cell, and the second message is a system message or dedicated signaling.

In a possible implementation method, the processing unit 810 is configured to control the transceiver unit 820 to send fifth indication information, where the fifth indication information indicates a manner of calculating a timing advance.

For more detailed descriptions about the processing unit 810 and the transceiver unit 820, refer to related descriptions in the foregoing method embodiments.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data needed by the processor 910 to run the instructions, or store data generated after the processor 910 runs the instructions.

When the communication apparatus 900 is configured to implement the foregoing method embodiments, the processor 910 is configured to implement a function of the processing unit 810, and the interface circuit 920 is configured to implement a function of the transceiver unit 820.

When the communication apparatus is a chip used in a terminal device, the chip of the terminal device implements a function of the terminal device in the foregoing method embodiments. The chip of the terminal device receives information from another module (for example, a radio frequency module or an antenna) of the terminal device, where the information is sent by a base station to the terminal device. Alternatively, the chip of the terminal device sends information to another module (for example, a radio frequency module or an antenna) of the terminal device, where the information is sent by the terminal device to a base station.

When the communication apparatus is a module used in a base station, the module of the base station implements functions of the base station in the foregoing method embodiments. The module of the base station receives information from another module (for example, a radio frequency module or an antenna) of the base station, where the information is sent by a terminal device to the base station. Alternatively, the module of the base station sends information to another module (for example, a radio frequency module or an antenna) of the base station, where the information is sent by the base station to a terminal device. The module of the base station herein may be a baseband chip of the base station, or may be a CU, a DU, or another module, or may be an apparatus in an open radio access network (open radio access network, O-RAN) architecture, for example, an apparatus like an open CU or an open DU.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by software instructions that are executable by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal device. The processor and the storage medium may alternatively exist in the base station or the terminal device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In the formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device and comprising:

   receiving time information from a first cell, wherein the time information indicates first time at which switching without layer 3 L3 signaling takes effect; and
   performing switching from the first cell to a second cell based on the time information.

2. The method according to claim 1, wherein the method further comprises:
   starting a first timer after the first time arrives, wherein the terminal device determines, after the first timer expires, that the switching fails.

**3.** The method according to claim 2, wherein the method further comprises:

> receiving a first message from the first cell, wherein the first message comprises timing duration of the first timer, and the first message is a system message or dedicated signaling; or configuring timing duration for the first timer.

**4.** The method according to claim 2 or 3, wherein the method further comprises:

> sending first indication information to the second cell, wherein the first indication information indicates that the terminal device has switched to the second cell; and stopping the first timer after receiving second indication information from the second cell, wherein the second indication information indicates that the switching is completed.

**5.** The method according to claim 4, wherein the method further comprises: generating the first indication information after receiving a random access response from the second cell.

**6.** The method according to claim 4, wherein the method further comprises:

> receiving third indication information from the first cell, wherein the third indication information indicates random access-less switching; and generating the first indication information after the first time arrives.

**7.** The method according to any one of claims 4 to 6, wherein the first indication information is radio resource control RRC information or medium access control MAC layer information.

**8.** The method according to any one of claims 1 to 7, wherein the method further comprises:

> receiving fourth indication information from the first cell, wherein the fourth indication information indicates a pre-configured uplink resource; and sending uplink data on the pre-configured uplink resource after the first time arrives.

**9.** The method according to any one of claims 1 to 8, wherein the method further comprises: starting a second timer after the first time arrives, wherein the second timer indicates uplink timing alignment duration of the terminal device in the second cell.

**10.** The method according to claim 9, wherein the method further comprises:

> receiving a second message from the first cell, wherein the second message comprises timing duration of the second timer, and the second message is a system message or dedicated signaling; or configuring timing duration for the second timer.

**11.** The method according to any one of claims 1 to 10, wherein the method further comprises: receiving fifth indication information from the first cell, wherein the fifth indication information indicates a manner of calculating a timing advance.

**12.** The method according to any one of claims 1 to 11, wherein the method further comprises:

> after the first time arrives, when a difference between a first timing advance and a second timing advance is greater than or equal to a timing advance offset threshold, triggering reporting of the first timing advance, wherein the first timing advance is a timing advance that is most recently determined, the second timing advance is a timing advance that is most recently reported to the first cell, and the timing advance offset threshold is from the first cell.

**13.** The method according to any one of claims 1 to 11, wherein the method further comprises:

> receiving sixth indication information, wherein the sixth indication information indicates whether a timing advance needs to be reported in a switching procedure without L3 signaling; and when the sixth indication information indicates that the timing advance needs to be reported in the switching procedure without L3 signaling, triggering reporting of a first timing advance, wherein the first timing advance is a timing advance that is most recently determined.

**14.** The method according to any one of claims 1 to 11, wherein the method further comprises:

> receiving a timing advance offset threshold from the second cell after the switching is completed; and triggering, based on the timing advance offset threshold, reporting of a first timing advance, wherein the first timing advance is a timing advance that is most recently determined.

**15.** The method according to any one of claims 1 to 14, wherein the time information comprises at least one of the following:

time at which the first cell stops providing a service;
time at which the second cell starts to provide a service;
time for downlink synchronization between the terminal device and the second cell; and
the first time at which the switching without L3 signaling takes effect.

16. The method according to any one of claims 1 to 15, wherein the method further comprises:
clearing a terminal device-level scheduling offset of the terminal device after the first time arrives.

17. The method according to any one of claims 1 to 16, wherein the method further comprises:

receiving a third message, wherein the third message comprises a cell-level scheduling offset of the second cell, and the third message is a system message or dedicated signaling; and
setting the scheduling offset of the terminal device as the cell-level scheduling offset of the second cell after the first time arrives.

18. The method according to any one of claims 1 to 16, wherein the method further comprises:
setting the scheduling offset of the terminal device as a cell-level scheduling offset of the first cell after the first time arrives.

19. The method according to any one of claims 1 to 18, wherein the method further comprises:
receiving dedicated signaling from the first cell, wherein the dedicated signaling comprises a resource for non-contention-based random access.

20. The method according to claim 19, wherein the method further comprises:
after the first time arrives or after performing switching from the first cell to the second cell, performing a random access procedure based on the resource for non-contention-based random access.

21. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 20 through a logic circuit or by executing code instructions.

22. A communication apparatus, comprising a module configured to perform the method according to any one of claims 1 to 20.

23. A computer-readable storage medium, wherein the storage medium stores a computer program or instructions; and when the computer program or the instructions are executed by a communication apparatus, the method according to any one of claims 1 to 20 is implemented.

FIG. 1

FIG. 2

FIG. 3

FIG. 4

Terminal device | First cell | Second cell

501: SIB (time information)

502: The terminal device accesses the first cell

503: Fourth indication information

504: Uplink data

FIG. 5

Terminal device | First cell | Second cell

601: SIB (time information)

602: The terminal device accesses the first cell

603: Fifth indication information

604: Determine a first timing advance based on the fifth indication information

605: Enable the first timing advance and start a second timer

FIG. 6

| Terminal device | First cell | Second cell |
|---|---|---|

701: SIB (time information)

702: The terminal device accesses the first cell

703: Determine a first timing advance

704: First timing advance

FIG. 7

Communication apparatus 800

Processing unit 810

Transceiver unit 820

FIG. 8

Communication apparatus 900

Processor 910

Interface circuit 920

Memory 930

FIG. 9

FIG. 10

FIG. 11

## INTERNATIONAL SEARCH REPORT

| International application No. |
|---|
| **PCT/CN2024/082299** |

### A. CLASSIFICATION OF SUBJECT MATTER

H04W 36/00(2009.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

3GPP, CNTXT, ENTXTC, CNKI: 不, 层3, 没有, 免随机接入切换, 切换, 无, 无RACH, 信令, handover, HO, L3, less, no, NTN, perform, RACH, TA, timer, trigger, without, not, RACH-less handover, layer3, RACH-less HO

### C. DOCUMENTS CONSIDERED TO BE RELEVANT

| Category* | Citation of document, with indication, where appropriate, of the relevant passages | Relevant to claim No. |
|---|---|---|
| X | WO 2022153960 A1 (NEC CORP.) 21 July 2022 (2022-07-21)<br>description, paragraphs 0042 and 0053-0055 | 1-23 |
| A | CN 114765812 A (CHINA MOBILE COMMUNICATION CO., LTD., RESEARCH INSTITUTE et al.) 19 July 2022 (2022-07-19)<br>entire document | 1-23 |
| A | US 2022191748 A1 (NOKIA TECHNOLOGIES OY) 16 June 2022 (2022-06-16)<br>entire document | 1-23 |
| A | US 2023130286 A1 (SAMSUNG ELECTRONICS CO., LTD.) 27 April 2023 (2023-04-27)<br>entire document | 1-23 |
| A | ERICSSON. "Connected mode aspects for NTN"<br>*3GPP TSG-RAN WG2 Meeting #112 electronic, R2-2009821,*<br>13 November 2020 (2020-11-13),<br>entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 May 2024** | **10 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082299**

| Patent document cited in search report | | | Publication date (day/month/year) | Patent family member(s) | | | Publication date (day/month/year) |
|---|---|---|---|---|---|---|---|
| WO | 2022153960 | A1 | 21 July 2022 | EP | 4278479 | A1 | 22 November 2023 |
| | | | | US | 2024064586 | A1 | 22 February 2024 |
| | | | | GB | 2602810 | A | 20 July 2022 |
| | | | | JP | 2023549558 | A | 27 November 2023 |
| | | | | CN | 116830478 | A | 29 September 2023 |
| CN | 114765812 | A | 19 July 2022 | None | | | |
| US | 2022191748 | A1 | 16 June 2022 | WO | 2022122300 | A1 | 16 June 2022 |
| | | | | EP | 4260607 | A1 | 18 October 2023 |
| US | 2023130286 | A1 | 27 April 2023 | WO | 2023075423 | A1 | 04 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310539182
- CN 202311006078X